# EUROPEAN PATENT SPECIFICATION

(11) **EP 1 634 693 B1**
(45) Date of publication and mention of the grant of the patent: **01.04.2009**
(21) Application number: 04030428.9
(22) Date of filing: 22.12.2004
(51) Int. Cl.: B29C 67/00, C08L 77/00, C08L 77/02, C08L 77/06, C08K 7/02, C08K 7/04, C08K 7/06, C08K 7/14, C08K 7/28, C08K 3/08, C08K 3/00

(54) **Mixture of sinterable powders for rapid prototyping**
Mischung von sinterfähigen Pulvern für Rapid-Prototyping
Mélange de poudres frittables pour des procédés de prototypage rapide

(30) Priority: 09.09.2004 IT MO20040227
(43) Date of publication of application: 15.03.2006
(73) Proprietor: C.R.P. TECHNOLOGY S.R.L., 41100 Modena (IT)
(72) Inventor: Cevolini, Franco, 41041 Baggiovara (Prov. of Modena) (IT)
(74) Representative: Feltrinelli, Secondo Andrea

(56) References cited:
- WO-A-96/30195
- DE-A1- 19 942 071

## Description

The present invention relates to a mixture of sinterable powders for rapid prototyping, particularly for SLS (Selective Laser Sintering) processes.

As it is known, rapid prototyping is a technique that has been developed rather recently and allows to obtain automatically the prototype of a mechanical component starting from its corresponding CAD drawing, regardless of its geometry, in a short time and at a relatively low cost.

The resulting prototype can be used as a replacement of the actual component during tests for example of the photoelastic type in order to determine the mechanical characteristics of said component.

It is also known that there are various rapid prototyping technologies, which in any case entail superimposing a plurality of layers of material, which are mutually coupled so as to obtain a model, possibly a scale model, of the actual component.

These technologies differ in the manner in which the layers of material are applied during the construction of the prototype; in particular, each technology is based on a different physical principle, which determines the nature and state of final aggregation of the materials used.

The rapid prototyping process is organized into several steps: initially, the component being studied must be designed with the aid of a three-dimensional solid- or surface-modeling system, so as to obtain a three-dimensional CAD model, which is then converted into a format that can be read by the prototyping machine generally an STL (stereolithography) format.

This conversion consists in approximating the surface of the model by means of a plurality of juxtaposed triangles, which are arranged adjacent to each other so as to cover all of said surface.

The model in the STL format is sectioned by the software that manages the rapid prototyping machine with a plurality of parallel planes that are spaced with an appropriate thickness.

Each plane is one of the layers of material that the machine subsequently superimposes; the contiguous layers are bonded to each other already during the construction of the prototype.

Finally, it is possible to subject the resulting prototype to cleaning and finishing operations or to other kinds of treatment.

One of the known rapid prototyping technologies is constituted for example by the so-called SLS (Selective Laser Sintering) method, which is based on the consolidation of the powders by means of a sintering process obtained by using a laser.

The machine used to perform this method is substantially constituted by a vertically-movable platform on which the powder is deposited, said powder being retained inside the machine at a temperature that is just below its melting point, so as to constitute a layer of uniform thickness, which is struck by the laser only at the region that matches the corresponding cross-section of the model to be provided, causing it to sinter.

The platform then moves downward by an extent that corresponds to the thickness of material that has been deposited, and a new layer of powder is superimposed on the preceding one and sintered as described above, so as to solidify and grip the underlying layer.

The process is repeated until the complete model is obtained.

The material currently used in rapid prototyping processes and particularly in the SLS method is generally constituted by a mixture of powders of the polyamide type, optionally with the addition of powders of various kinds having a reinforcing effect.

Although these mixtures of sinterable powders allow to obtain models of more than satisfactory quality, they are not free from drawbacks, including the fact that the resulting models have limited moduli of elasticity and low ultimate tensile strengths.

It is known from documents WO 2005/090448 A1 and WO2005/090449 A1, that were published after the priority of the present application, a process for producing a material, in powder or granular form to be used for rapid prototyping based on the SLS technique, in which the composition of this material includes reinforcement fibers that are provided in order to reinforce the structure of the prototypal parts obtained by this technique.

The reinforcement fibers can be mixed to a matrix formed by powder particles of a metallic or thermoplastic material, or they can be originally embedded into grains or particles of the material.

Further information on solutions and materials, in particular including reinforcement fibers, for use in the field of rapid prototyping based on the SLS technique can be found in document DE 19942071 A1.

It is even mentioned document WO 96/30195 A which refers to a composition for a mixture intended for use in rapid prototyping, even if not including in its composition reinforcement fibers.

The aim of the present invention is to provide a mixture of sinterable powders for rapid prototyping that allows to optimize the characteristics of mechanical strength of the models obtained with it.

In view of this aim and of other objects that will become better apparent hereinafter, according to the present invention a mixture of sinterable powders for rapid prototyping is provided which comprises a polymeric powder matrix, a reinforcement material in the form of fibers and all the other features defined by the main independent claim.

The polymeric matrix is preferably of the polyamide type and may comprise for example nylon.

Such reinforcement material may be of the polymeric type, preferably constituted by aramid-type fibers, of the inorganic type, preferably constituted by glass and/or carbon fibers, or of a polymeric and inorganic type.

The expression "aramid fibers" is used to designate fibers made of aromatic polyamides with an aromatic group content of more than 85%.

The aramid-type fibers can be constituted for example by fibers of poly-paraphenyleneterephthalamide known under the brand name Kevlar, and provided by the DuPont Company.

The fibers that constitute the reinforcement material may be of a chopped or milled type.

Conventionally, chopped fibers are fibers with a length between 3 and 6 mm and milled fibers are fibers with a length between 150 and 450 µm.

The mixture may further comprise material of a substantially glassy type in the form of microspheres, powdered aluminium and powdered graphite.

The polymeric matrix, the reinforcement material in the form of fibers, the glassy material in the form of microspheres, the powdered aluminium and the powdered graphite are present in the following quantities, which are mutually independent and are expressed as percentages of the total weight of the mixture:
polymeric matrix, between 20% and 99%; reinforcement material in the form of fibers, between 1% and 80%; glassy material in the form of microspheres, between 0% and 70%; powdered aluminum, between 0% and 70%; powdered graphite, between 0% and 40%.

The polymeric matrix, the reinforcement material in the form of fibers, the glassy material in the form of microspheres, the powdered aluminum and powdered graphite are preferably present in the following quantities, which are mutually independent of each other and are expressed as percentages of the total weight of the mixture:
polymeric matrix, between 50% and 90%; reinforcement material in the form of fibers, between 10% and 50%; glassy material in the form of microspheres, between 15% and 25%; powdered aluminum, between 10% and 25%; powdered graphite, between 0% and 10%.

According to conventional operating methods and depending on the quantities to be produced, the mixture according to the invention can be prepared by mechanical mixing (for example, inside mixers in which the appropriate quantities of the various components are introduced) or by pneumatic mixing (for example, by blowing air into silos that contain the various components); alternative embodiments are of course not excluded.

The resulting mixture is ready for use and can therefore feed conventional rapid prototyping machines, particularly machines for performing the SLS method.

Conveniently, said mixture can be applied in all conventional fields of use of rapid prototyping, such as for example the manufacture of parts of vehicles, electrical household appliances, design items or others.

Advantageously, it has been found by means of laboratory tests that the models provided with the mixture according to the invention have a greater mechanical strength than prototypes obtained with conventional materials, both at ambient temperature and at high temperatures.

Moreover, significant increases in elastic modulus and in the ultimate tensile strength of the material have been observed.

The ultimate tensile strength of the material obtained by sintering the mixture according to the present invention is in fact on the order of magnitude of 55-60 MPa, whereas the ultimate tensile strength of the materials conventionally used in rapid prototyping is on the order of magnitude of 40-48 MPa.

The following examples are given only as an illustration of the present invention and must not be understood as limiting its scope as defined by the accompanying claims.

### EXAMPLE 1

A first mixture of sinterable powders for rapid prototyping that can be obtained from the following components:

| | |
|---|---|
| polymeric matrix | 60% |
| reinforcement material in the form of fibers | 30% |
| glassy material in the form of microspheres | 10% |
| powdered aluminum | 0% |
| powdered graphite | 0% |

### EXAMPLE 2

A second mixture of sinterable powders for rapid prototyping that can be obtained from the following components:

| | |
|---|---|
| polymeric matrix | 50% |
| reinforcement material in the form of fibers | 20% |
| glassy material in the form of microspheres | 15% |
| powdered aluminum | 10% |
| powdered graphite | 5% |

The persons skilled in the art would readily understand that other mixtures of sinterable powders may be prepared, based on the disclosure of the invention set forth above, all of which however would be considered as comprised within the scope of the claims.

The disclosures in Italian Patent Application No. MO2004A000227 from which this application claims priority are incorporated herein by reference.

## Claims

1. A mixture of sinterable powders for rapid prototyping, comprising a polymeric matrix in powder form,
wherein said mixture comprises a reinforcement material in the form of fibers, and
wherein said fibers are of the chopped and/or milled type, with said chopped fibers having a length between 3 and 6 mm and with said milled fibers having a length between 150 and 450 µm.

2. The mixture according to claim 1, **characterized in that** said reinforcement material is of a substantially polymeric and/or inorganic type.

3. The mixture according to claim 2, **characterized in that** said polymeric reinforcement material is of the aramid type.

4. The mixture according to claim 2, **characterized in that** said inorganic reinforcement material comprises at least glass or carbon or both.

5. The mixture according to claim 3, **characterized in that** said aramid polymeric reinforcement material comprises at least Kevlar.

6. The mixture according to one or more of the preceding claims, **characterized in that** said polymeric matrix is of a substantially polyamide type.

7. The mixture according to claim 6, **characterized in that** said polyamide polymeric matrix comprises nylon.

8. The mixture according to one or more of the preceding claims, **characterized in that** it comprises material of a substantially glassy type in the form of microspheres.

9. The mixture according to one or more of the preceding claims, **characterized in that** it comprises powdered aluminium.

10. The mixture according to one or more of the preceding claims, **characterized in that** it comprises powdered graphite.

11. The mixture according to one or more of the preceding claims, **characterized in that** said polymeric matrix is present in quantities comprised between 20% and 99% by weight.

12. The mixture according to claim 11, **characterized in that** said polymeric matrix is present in quantities comprised between 50% and 90% by weight.

13. The mixture according to one or more of the preceding claims, **characterized in that** said reinforcement material is present in quantities comprised between 1% and 80% by weight.

14. The mixture according to claim 13, **characterized in that** said reinforcement material is present in quantities comprised between 10% and 50% by weight.

15. The mixture according to claim 8, **characterized in that** said glassy material in the form of microspheres is present in quantities comprised between 0% and 70% by weight.

16. The mixture according to claim 15, **characterized in that** said glassy material in the form of microspheres is present in quantities comprised between 15% and 25% by weight.

17. The mixture according to claim 9, **characterized in that** said powdered aluminium is present in quantities comprised between 0% and 70% by weight.

18. The mixture according to claim 17, **characterized in that** said powdered aluminium is present in quantities comprised between 10% and 25% by weight.

19. The mixture according to claim 10, **characterized in that** said powdered graphite is present in quantities comprised between 0% and 40% by weight.

20. The mixture according to claim 19, **characterized in that** said powdered graphite is present in quantities comprised between 0% and 10% by weight.

21. The mixture according to claim 1, further including glassy material in the form of microspheres, **characterized in that** said polymeric matrix, said reinforcement material in the form of fibers and said glassy material in the form of microspheres are present in the following quantities, by weight:
| | |
|---|---|
| polymeric matrix | 60% |
| reinforcement maternal in the form of fibers | 30% |
| glassy material in the form of microspheres | 10% |

22. The mixture according to claim 1, further including glassy material in the form of microspheres, powdered aluminium and powdered graphite, **characterized in that** said polymeric matrix, said reinforcement material in the form of fibers, said glassy material in the form of microspheres, said powdered aluminium and said powdered graphite are present in the following quantities, by weight:
| | |
|---|---|
| polymeric matrix | 50% |
| reinforcement material in the form of fibers | 20% |
| glassy material in the form of microspheres | 15% |
| powdered aluminium | 10% |
| powdered graphite | 5% |

23. A process for the preparation of a mixture of sinterable powders for rapid prototyping,
wherein said mixture is prepared by mixing together a polymeric matrix in powder form and a reinforcement material in the form of fibers, and
wherein said fibers are of the chopped and/or milled type, with said chopped fibers having a length between 3 and 6 mm and with said milled fibers having a length between 150 and 450 µm.

## Patentansprüche

1. Mischung aus sinterfähigen Pulvern für Rapid-Prototyping (schneller Prototypenbau) mit einer Polymermatrix in Pulverform,
wobei die Mischung ein Verstärkungsmaterial in Form von Fasern aufweist, und
wobei es sich bei den Fasern um geschnittene Fasern und/oder gemahlene Fasern handelt, und die geschnittenen Fasern eine Länge zwischen 3 und 6 mm und die gemahlenen Fasern eine Länge zwischen 150 und 450 µm aufweisen.

2. Mischung nach Anspruch 1, **dadurch gekennzeichnet, dass** es sich bei dem Verstärkungsmaterial im wesentlichen um ein Polymer und / oder anorganisches Material handelt.

3. Mischung nach Anspruch 2, **dadurch gekennzeichnet, dass** es sich bei dem polymerischen Verstärkungsmaterial um ein Aramid handelt.

4. Mischung nach Anspruch2, **dadurch gekennzeichnet, dass** es sich bei dem anorganischen Verstärkungsmaterial mindestens um Glas oder Kohlenstoff oder beides handelt.

5. Mischung nach Anspruch 3, **dadurch gekennzeichnet, dass** es sich bei dem polymerischen Verstärkungsmaterial Aramid mindestens um Kevlar handelt.

6. Mischung nach einem oder mehreren der vorhergehenden Ansprüche, **dadurch gekennzeichnet, dass** es sich bei der Polymermatrix im wesentlichen um ein Polyamid handelt.

7. Mischung nach Anspruch 6, **dadurch gekennzeichnet, dass** die Polymermatrix Polyamid Nylon aufweiset.

8. Mischung nach einem oder mehreren der vorhergehenden Ansprüche, **dadurch gekennzeichnet, dass** sie im wesentlichen glasartiges Material in Form von Mikrokügelchen aufweist.

9. Mischung nach einem oder mehreren der vorhergehenden Ansprüche, **dadurch gekennzeichnet, dass** sie pulverförmiges Aluminium aufweist.

10. Mischung nach einem oder mehreren der vorhergehenden Ansprüche, **dadurch gekennzeichnet, dass** sie pulverförmiges Graphit aufweist.

11. Mischung nach einem oder mehreren der vorhergehenden Ansprüche, **dadurch gekennzeichnet, dass** die Polymermatrix in Mengen zwischen 20 und 99 Gewichtsprozent vorhanden ist.

12. Mischung nach Anspruch 11, **dadurch gekennzeichnet, dass** die Polymermatrix in Mengen zwischen 50 und 90 Gewichtsprozent vorhanden ist.

13. Mischung nach einem oder mehreren der vorhergehenden Ansprüche, **dadurch gekennzeichnet, dass** das Verstärkungsmaterial in Mengen zwischen 1 und 80 Gewichtsprozent vorhanden ist.

14. Mischung nach Anspruch 13, **dadurch gekennzeichnet, dass** das Verstärkungsmaterial in Mengen zwischen 10 und 50 Gewichtprozent vorhanden ist.

15. Mischung nach Anspruch 8, **dadurch gekennzeichnet, dass** das glasartige Material in Form von Mikrokügelchen in Mengen zwischen 0 und 70 Gewichtsprozent vorhanden ist.

16. Mischung nach Anspruch 15, **dadurch gekennzeichnet, dass** das glasartige Material in Form von Mikrokügelchen in Mengen zwischen 15 und 25 Gewichtsprozent vorhanden ist.

17. Mischung nach Anspruch 9, **dadurch gekennzeichnet, dass** das pulverförmige Aluminium in Mengen zwischen 0 und 70 Gewichtsprozent vorhanden ist.

18. Mischung nach Anspruch 17, **dadurch gekennzeichnet, dass** das pulverförmige Aluminium in Mengen zwischen 10 und 25 Gewichtsprozent vorhanden ist.

19. Mischung nach Anspruch 10, **dadurch gekennzeichnet, dass** das pulverförmige Graphit in Mengen zwischen 0 und 40 Gewichtsprozent vorhanden ist.

20. Mischung nach Anspruch 19, **dadurch gekennzeichnet, dass** das pulverförmige Graphit in Mengen zwischen 0 und 10 Gewichtsprozent vorhanden ist.

21. Mischung nach Anspruch 1, die weiterhin glasartiges Material in Form von Mikrokügelchen aufweiset, **dadurch gekennzeichnet, dass** die Polymermatrix, das Verstärkungsmaterial in Form von Fasern und das glasartige Material in Form von Mikrokügelchen in folgenden Mengen, ausgedrückt in Gewichtsprozent, vorhanden sind:
| | |
|---|---|
| Polymermatrix | 60 % |
| Verstärkungsmaterial, in Form von Fasern | 30 % |
| glasartiges Material in Form von Mikrokügelchen | 10 % |

22. Mischung nach Anspruch 1, die weiterhin glasartiges Material in Form von Mikrokügelchen, pulverförmigem Aluminium und pulverförmigem Graphit aufweist, **dadurch gekennzeichnet, dass** die Polymermatrix das Verstärkungsmaterial in Form von Fasern, das glasartige Material in Form von Mikrokügelchen, das pulverförmige Aluminium und das pulverförmiges Graphit in folgenden Mengen, ausgedrückt in Gewichtsprozent, vorhanden sind:
| | |
|---|---|
| Polymermatrix | 50 % |
| Verstärkungsmaterial in Form von Fasern | 20 % |
| glasartiges Material in Form von Mikrokügelchen | 15 % |
| pulverförmiges Aluminium | 10 % |
| pulverförmiges Graphit | 5 % |

23. Verfahren zur Herstellung einer Mischung von sinterfähigen Pulvern für Rapid-Prototyping (schneller Prototypenbau),
wobei die Mischung durch Vermischen einer Polymermatrix in Pulverform mit einem Verstärkungsmaterial in Form von Fasern hergestellt wird, und
wobei es sich bei den Fasern um geschnittene Fasern und/oder gemahlene Fasern handelt, und die geschnittenen Fasern eine Länge zwischen 3 und 6 mm und die gemahlenen Fasern eine Länge zwischen 150 und 450 µm aufweisen.

## Revendications

1. Mélange de poudres aptes au frittage pour un prototypage rapide, comprenant une matrice polymère sous forme de poudre,
dans lequel ledit mélange comprend un matériau de renfort sous la forme de fibres, et
dans lequel lesdites fibres sont du type coupées et/ou broyées, lesdites fibres coupées ayant une longueur comprise entre 3 et 6 mm, et lesdites fibres broyées ayant une langueur comprise entre 150 et 450 µm.

2. Mélange selon la revendication 1, ***caractérisé en ce que*** ledit matériau de renfort est d'un type essentiellement polymère et/ou inorganique.

3. Mélange selon la revendication 2, ***caractérisé en ce que*** ledit matériau de renfort polymère est de type aramide.

4. Mélange selon la revendication 2, ***caractérisé en ce que*** ledit matériau de renfort inorganique comprend au moins du verre ou du carbone, ou les deux.

5. Mélange selon la revendication 3, ***caractérisé en ce que*** ledit matériau de renfort polymère aramide comprend au moins du Kevlar.

6. Mélange selon l'une ou plusieurs des revendications précédentes, ***caractérisé en ce que*** ladite matrice polymère est d'un type essentiellement polyamide.

7. Mélange selon la revendication 6, ***caractérisé en ce que*** ladite matrice polymère polyamide comprend du nylon.

8. Mélange selon l'une ou plusieurs des revendications précédentes, ***caractérisé en ce qu*'**il comprend un matériau du type essentiellement vitreux sous forme de microsphères.

9. Mélange selon l'une ou plusieurs des revendications précédentes, ***caractérisé en ce qu*'**il comprend de la poudre d'aluminium.

10. Mélange selon l'une ou plusieurs des revendications précédentes, ***caractérisé en ce qu*'**il comprend de la poudre de graphite.

11. Mélange selon l'une ou plusieurs des revendications précédentes, ***caractérisé en ce que*** ladite matrice polymère est présente dans des quantités comprises entre 20 % et 99 % pondéraux.

12. Mélange selon la revendication 11, ***caractérisé en ce que*** ladite matrice polymère est présente dans des quantités comprises entre 50 % et 90 % pondéraux.

13. Mélange selon l'une ou plusieurs des revendications précédentes, ***caractérisé en ce que*** ledit matériau de renfort est présent dans des quantités comprises entre 1 % et 80 % pondéraux.

14. Mélange selon la revendication 13, ***caractérisé en ce que*** ledit matériau de renfort est présent dans des quantités comprises entre 10 % et 50 % pondéraux.

15. Mélange selon la revendication 8, ***caractérisé en ce que*** ledit matériau vitreux sous forme de microsphères est présent dans des quantités comprises entre 0 % et 70 % pondéraux.

16. Mélange selon la revendication 15, ***caractérisé en ce que*** ledit matériau vitreux sous forme de microsphères est présent dans des quantités comprises entre 15 % et 25 % pondéraux.

17. Mélange selon la revendication 9, ***caractérisé en ce que*** ladite poudre d'aluminium est présente dans des quantités comprises entre 0 % et 70 % pondéraux.

18. Mélange selon la revendication 17, ***caractérisé en ce que*** ladite poudre d'aluminium est présente dans des quantités comprises entre 10 % et 25 % pondéraux.

19. Mélange selon la revendication 10, ***caractérisé en ce que*** ladite poudre de graphite est présente dans des quantités comprises entre 0 % et 40 % pondéraux.

20. Mélange selon la revendication 19, ***caractérisé en ce que*** ladite poudre de graphite est présente dans des quantités comprises entre 0 % et 10 % pondéraux.

21. Mélange selon la revendication 1, comprenant en plus un matériau vitreux sous forme de microsphères, ***caractérisé en ce que*** ladite matrice polymère, ledit matériau de renfort sous forme de fibres et ledit matériaux vitreux sous forme de microsphères sont présents dans les quantités pondérales suivantes :
| | |
|---|---|
| matrice polymère | 60 % |
| matériau de renfort sous forme de fibres | 30 % |
| matériau vitreux sous forme de microsphères | 10 %. |

22. Mélange selon la revendication 1, comprenant en plus un matériau vitreux sous Forme de microsphères, de la poudre d'aluminium et de la poudre de graphite, ***caractérisé en ce que*** ladite matrice polymère, ledit matériau de renfort sous forme de fibres, ledit matériaux vitreux sous forme de microsphères, ladite poudre d'aluminium et ladite poudre de graphite sont présents dans les quantités pondérales suivantes :
| | |
|---|---|
| matrice polymère | 50 % |
| matériau de renfort sous forme de fibres | 20 % |
| matériau vitreux sous forme de microsphères | 15 % |
| poudre d'aluminium | 10 % |
| poudre de graphite | 5 %. |

23. Procédé de préparation d'un mélange de poudres aptes au frittage pour un prototypage rapide,
dans lequel ledit mélange est préparé en mélangeant entre eux une matrice polymère sous forme de poudre et un matériau de renfort sous forme de fibres, et
dans lequel lesdites fibres sont du type coupées et/ou broyées, lesdites fibres coupées ayant une longueur comprise entre 3 et 6 mm, et lesdites fibres broyées ayant une longueur comprise entre 150 et 450 µm.
